# EUROPÄISCHE PATENTANMELDUNG

(11) **EP 0 994 332 A1**
(43) Veröffentlichungstag der Anmeldung: **19.04.2000**
(21) Anmeldenummer: 99119572.8
(22) Anmeldetag: 02.10.1999
(51) Int. Cl.: G01F 1/684

(54) **Luftmassenmesser**

(30) Priorität: 16.10.1998 DE 19847714
(71) Anmelder: Mannesmann VDO Aktiengesellschaft, 60388 Frankfurt am Main (DE)
(72) Erfinder: Gössling, Axel, 61381 Friedrichsdorf (DE); Krüger, Jörg, 60435 Frankfurt (DE); Neugärtner, Jörg, 93051 Regensburg (DE)
(74) Vertreter: Klein, Thomas, Dipl.-Ing.

(57) **Zusammenfassung**

Ein Luftmassenmesser besitzt einen oder mehrere in einem venturidüsenartigen Kanal im Luftstrom liegende Sensoren. Diese sind auf einer Trägerplatte (12) angeordnet. Bisher wird die Trägerplatte (12) von der Seite her durch eine Öffnung in den Venturikanal geschoben. Um Beschädigungen bei der Montage zu vermeiden, wird vorgeschlagen, daß die Trägerplatte (12) zumindest eine Seitenwandung des venturidüsenartigen Kanals bildet. Eine Halbschale (14) des Kanals bildet dabei gleichzeitig eine Schutzkappe für die Sensoren (24). Eine herstellerseitige Kalibrierung des Luftmassenmessers (10) ist ohne weiteres möglich.

## Beschreibung

Die Erfindung befaßt sich mit einem Luftmassenmesser mit einem oder mehreren in einem venturidüsenartigen Kanal im Luftstrom liegenden Sensoren, die auf einer Trägerplatte angeordnet sind.

Luftmassenmesser werden beispielsweise bei Brennkraftmaschinen von Kraftfahrzeugen zur Bestimmung der angesaugten Luftmasse verwendet. Die angesaugte Luftmasse wird als Kenngröße für die Steuerung der Gemischzubereitung benötigt. Luftmassenmesser umfassen dabei meistens eine Sensoranordnung aus zwei elektrischen Bauelementen mit großem Temperaturkoeffizienten. Diese werden gewöhnlich in einer Brücke miteinander verschaltet, wobei der zum Brückenabgleich notwendige Energiebetrag beziehungsweise die auftretenden Widerstandsänderungen ein Maß für die in einer bestimmten Zeiteinheit vorbeiströmende Luftmasse ist. Zur Vermeidung einer Verfälschung des Meßergebnisses durch Unregelmäßigkeiten von Temperatur oder Strömung werden die beiden elektrischen Sensoren möglichst nahe beieinander im Ansaugluftstrom angeordnet, wobei sie üblicherweise auf einer gemeinsamen Trägerplatte sitzen.

Da die Meßergebnisse auch durch Wirbelbildung im Ansaugluftstrom verfälscht werden können, ist es beispielsweise aus der DE-OS 37 26 223 bekannt, die Sensoren in einer venturiähnlichen Düse mit rundem oder eckigem Querschnitt anzuordnen. Die venturiähnliche Ausbildung des Kanals stabilisiert die Strömung in einem weiten Durchsatzbereich, so daß die ermittelten Meßergebnisse eindeutig bestimmten Strömungen zuordenbar sind.

In der DE-OS 37 26 223 wird die Trägerplatte bei der Montage des Ansaugsystems der Verbrennungskraftmaschine durch eine seitliche Öffnung in den Venturiquerschnitt eingeschoben. Dabei kann es sehr leicht zu einer Beschädigung der Sensoren kommen, die meist als berührungsempfindliche Heißfilmluftmassensensoren ausgebildet sind. Um Streuungen, die nicht zuletzt auch auf Montagefehler zurückzuführen sind, ausgleichen zu können, verfügt der Luftmassenmesser über eine längsverschiebliche Anordnung der Trägerplatte, die zur Durchführung des notwendigen Abgleichs der Sensoren dient. Problematisch ist bei dieser Anordnung weiterhin, daß die Trägerplatte selbst im Luftstrom liegt und damit zur Wirbelbildung beitragen kann, welcher die Meßergebnisse verfälscht.

Die Aufgabe der Erfindung besteht darin, einen Luftmassenmesser zu schaffen, der einfacher und sicherer zu montieren ist.

Erfindungsgemäß wird die Aufgabe dadurch gelöst, daß die Trägerplatte zumindest eine Seitenwandung des venturidüsenartigen Kanals bildet.

Die erfindungsgemäße Lösung bietet den Vorteil, daß der zusätzliche Montageschritt, bei welchem bisher die Trägerplatte in das venturidüsenartige Rohr eingeschoben wurde, entfallen kann, wobei gerade dieser Montageschritt häufig Beschädigungen der empfindlichen Sensoren verursachte. Ein weiterer Vorteil der Erfindung besteht darin, daß die Sensoren immer an einer exakt vorbestimmten Stelle des venturiartigen Kanals sitzen und daher nicht mit Lagefehlern infolge von Montageungenauigkeiten zu rechnen ist.

Ein weiterer großer Vorteil der Erfindung besteht darin, daß die Trägerplatte selbst nicht mehr im angesaugten Luftstrom liegt und daher keine Luftstromverwirbelungen befürchtet werden müssen, die die Meßgenauigkeit verschlechtern könnten.

In bevorzugter Ausführungsform der Erfindung ist eine venturidüsenartige Halbschale auf der Trägerplatte befestigt.

Die Halbschale wird bereits vom Hersteller des Luftmassenmessers auf der Trägerplatte angebracht und bildet bei der späteren Montage einen Teil des Ansaugsystems der Verbrennungskraftmaschine. Hierzu kann die Halbschale und/oder die Trägerplatte an ihren Enden mit Verbindungselementen versehen sein, die zur Verbindung mit Rohrelementen der Ansaugluftführung dienen.

Die Halbschalen dienen während des Transports und bei der Montage gleichzeitig als Schutzkappen für die empfindlichen Temperatursensoren.

Die Montage des Ansaugluftsystems einer Verbrennungskraftmaschine, das ohnehin aus mehreren ineinander gesteckten Rohrelementen besteht, wird durch das Einstecken des Luftmassenmessers nicht erschwert. Ferner ist ein Abgleich des Luftmassenmessers, dessen Trägerplatte gewöhnlich auch Anschlußkontakte, Verbindungsleitungen und die Auswertelektronik trägt, bereits von der Herstellerseite her möglich, da die Lage der Sensoren bezüglich des venturidüsenartigen Kanals sich bei der Montage nicht mehr ändern kann. So erhält beispielsweise ein Automobilhersteller einen exakt vorkalibrierten Luftmassenmesser und nachträgliche Abgleiche sind nicht erforderlich.

Die venturidüsenartige Halbschale ist zweckmäßigerweise mit Hilfe von Rastverbindungen auf der Trägerplatte eingeklipst oder mit dieser verklebt.

Die Trägerplatte kann selbstverständlich auch weitere Sensoren aufnehmen, beispielsweise einen Temperatursensor, der die Absoluttemperatur der Ansaugluft ermittelt. Neben der Kenntnis der angesaugten Luftmasse ist auch die Temperatur der angesaugten Luft ein für das Motormanagement wesentlicher Kennwert.

Nachfolgend wird anhand der beigefügten Zeichnungen näher auf ein Ausführungsbeispiel der Erfindung eingegangen.

Es zeigen:
- Figur 1: eine Draufsicht auf einen Luftmassenmesser;
- Figur 2: eine Seitenansicht des Luftmassenmessers nach Figur 1.

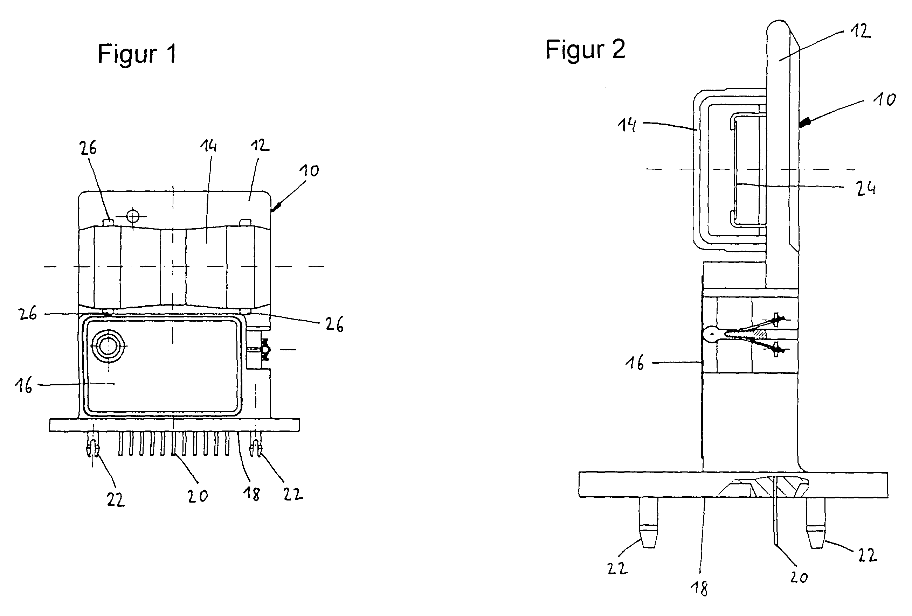

In Figur 1 ist ein Luftmassenmesser 10 dargestellt, der einen Teil des Luftweges der Ansaugluft einer Verbrennungskraftmaschine (nicht dargestellt) bildet. Der Luftmassenmesser 10 besteht im wesentlichen aus einer Trägerplatte 12, einer venturidüsenartigen Halbschale 14, einer Auswertelektronik 16, einem Anschlußbereich 18 mit Kontaktstiften 20 und Rastelementen 22 sowie der eigentlichen Luftmassensensorik 24 (siehe Figur 2), die aus zwei in einer Brücke miteinander verschalteten Sensoren besteht. Die eigentliche Sensorik 24 ist mit der Auswertelektronik 16 und den Kontaktstiften 20 über Leiterbahnen an der Trägerplatte 12 verbunden.

Die venturidüsenartige Halbschale 14 verfügt über Verbindungselemente 26, mit Hilfe derer sie auf der Trägerplatte 12 befestigt ist. Damit bilden der Teil der Trägerplatte 12 im Bereich der Sensorik 24 und die Halbschale 14 gemeinsam einen venturidüsenartigen Kanal, der für eine gleichmäßige Strömung im Meßbereich sorgt. Der Luftmassenmesser 10 wird dabei in das Ansaugsystem einer Verbrennungskraftmaschine geschaltet.

Die Halbschale 14 wird bereits bei der Herstellung des Luftmassenmessers 10 von dessen Hersteller aufgesetzt, und unmittelbar danach erfolgt ein Abgleich der Einrichtung mit Hilfe eines genormten Luftstromes durch den Kanal. Der Abgleich erfolgt auf elektronischem Wege durch Anpassung von Parametern der Auswertelektronik 16.

Der solchermaßen vormontierte und vorjustierte Luftmassenmesser 10 wird bei der Endmontage beispielsweise eines Kraftfahrzeuges in den Ansaugluftweg gesteckt und mit Hilfe eines im Anschlußbereich 18 anzubringenden Steckers mit der Motorelektronik verbunden. Eine Beschädigung der extrem empfindlichen Sensorik 24 bei der Montage ist ausgeschlossen, da die Halbschale 14 gleichzeitig als Schutzkappe dient.

### Bezugszeichenliste:

- 10: Luftmassenmesser
- 12: Trägerplatte
- 14: Halbschale
- 16: Auswerteelektronik
- 18: Anschlußbereich
- 20: Kontaktstifte
- 22: Rastelemente
- 24: Luftmassensensorik
- 26: Verbindungselemente

## Patentansprüche

1. Luftmassenmesser mit einem oder mehreren in einem venturidüsenartigen Kanal im Luftstrom liegenden Sensoren (24), die auf einer Trägerplatte (12) angeordnet sind, **dadurch gekennzeichnet**, daß die Trägerplatte (12) zumindest eine Seitenwandung des venturidüsenartigen Kanals bildet.

2. Luftmassenmesser nach Anspruch 1, **dadurch gekennzeichnet**, daß er ein Teil des Ansaugsystems einer Verbrennungskraftmaschine bildet.

3. Luftmassenmesser nach Anspruch 1 oder 2, **dadurch gekennzeichnet**, daß eine venturidüsenartige Halbschale (14) auf der Trägerplatte (12) befestigt ist.

4. Luftmassenmesser nach Anspruch 3, **dadurch gekennzeichnet**, daß die Halbschale (14) mit Hilfe von Rastverbindungen (26) auf der Trägerplatte (12) befestigt oder auf diese aufgeklebt ist.

5. Luftmassenmesser nach Anspruch 3 oder 4, **dadurch gekennzeichnet**, daß die Halbschale (14) und/oder die Trägerplatte (12) an ihren Enden mit Verbindungselementen zur Verbindung mit Rohrelementen der Ansaugluftführung der Verbrennungskraftmaschine versehen sind.

6. Luftmassenmesser nach einem der vorhergehenden Ansprüche, **dadurch gekennzeichnet**, daß auf der Trägerplatte (12) ein zusätzlicher Sensor zur Bestimmung des Absolutwertes der Ansauglufttemperatur angeordnet ist.

7. Luftmassenmesser nach einem der vorhergehenden Ansprüche, **dadurch gekennzeichnet**, daß auf der Trägerplatte neben den Sensoren (24) auch eine Auswertelektronik (16), Anschlußkontakte (20) sowie die zur Verbindung notwendigen Leiterbahnen vorgesehen sind.
